# EUROPEAN PATENT SPECIFICATION

(11) **EP 3 940 903 B1**
(45) Date of publication and mention of the grant of the patent: **07.08.2024**
(21) Application number: 21382634.0
(22) Date of filing: 13.07.2021
(51) Int. Cl.: H02G 3/06, H02G 3/04

(54) **JOINT FOR CABLE TRAYS AND CABLE TRAY**
VERBINDUNG FÜR KABELRINNEN UND KABELRINNE
JOINT POUR CHEMINS DE CÂBLES ET CHEMIN DE CÂBLE

(30) Priority: 15.07.2020 ES 202031546 U; 15.07.2020 ES 202031545 U
(43) Date of publication of application: 19.01.2022
(73) Proprietor: Basor Electric S.A., 46701 Gandia (Valencia) (ES)
(72) Inventor: BAÑULS TOBARUELA, JAVIER, 46701 GANDIA (ES)
(74) Representative: Isern Patentes y Marcas S.L.

(56) References cited:
- EP-A1- 3 148 024
- FR-A1- 2 481 015
- FR-A1- 2 680 206

## Description

### OBJECT OF THE INVENTION

The object of the present application is to provide a joint for cable trays, of the ones used for industrial facilities or the like, as well as a cable tray provided with such a joint.

More specifically, the invention proposes the development of a joint for cable trays, in particular for trays comprising a sheet which is elongated and substantially bent in the shape of a U, and joined together by means of a joining member which ensures the correct positioning of trays adjacent to each other and prevents damage to the cabling during the installation thereof.

### BACKGROUND OF THE INVENTION

The use of trays for the passage and guiding of electrical cabling in facilities, for example, of an industrial type, such that the cables are hidden and protected, with the possibility of placing an upper cover, is well known. A known embodiment of a joint is the one described in document No. ES 2 156 487 of the same holder, wherein it describes a sheet which is substantially bent in the shape of a U defining a housing wherein the cables rest, enabling a linear coupling of the trays. However, screw elements are used for the joint between adjacent trays, which requires a tool and a longer assembly time.

In order to solve the previous problem, there are cable trays which can be coupled to each other, without needing to use hardware elements in order to reduce the assembly time, thanks to the arrangement of a joining member which makes easily the coupling between female and male portions of adjacent cable trays.

However, it has been observed in practice that, during the placement of the cabling on the base of the trays, there is the possibility that the cabling can suffer tearing or cutting due to the contact of the cables with the ("sharp") end of the male portion of the trays protruding from the joining member. Therefore, there is a need to minimise this effect, which, although it may be occasional, if it does occur over time, it may involve replacing part or all of the cabling in a facility.

Furthermore, the applicant is currently unaware of a cable tray that has all the features described in this specification.

It is known from prior art EP 3148024 A1 which shows a joint for cables trays including on the both side walls of the trays a joining member.

### DESCRIPTION OF THE INVENTION

The present invention has been developed with the aim of providing a cable tray which is configured as a novelty within the field of application and solves the aforementioned drawbacks, further contributing other additional advantages that will be obvious from the description below.

It is therefore an object of the present invention to provide a joint for cable trays, comprising a sheet which is elongated and substantially bent in the shape of a U, defining a base and two side walls facing each other, wherein the base and the side walls have a plurality of perforations, wherein the side walls are provided on top with a reinforcing lip, including a male portion with a predetermined length with a transverse cross section with smaller dimensions with respect to the rest of the sheet, the male portion being free of the lip, and a female portion present at the opposite end intended for the coupling of a male portion of an adjacent tray, such that in a coupling condition of two adjacent trays with each other, the side walls and the base of the trays overlap with each other, the male portion being located inside the adjacent sheet in a coplanar manner, wherein the female portion includes on both side walls a joining member which is coupled through coupling means, defining a housing configured for the insertion of the male portion of an adjacent tray, the joining member having at least one fitting flange capable of fitting in a through hole made in the male portion.

In particular, the invention is characterised in that the joining member which makes up part of the joining system is formed by a substantially rectangular laminar body which includes, on the upper side thereof and on a side which is opposite from an access area for the insertion of the male portion into a coupling condition between two trays, rounded extensions which extend perpendicular to the laminar body, the laminar body being parallel to the side wall, such that a partially closed housing is defined between the inner face of the side wall. The invention is defined in independent claim 1. Preferred embodiments of the invention are defined in the dependent claims.

Thanks to these features, and especially to the design of the joining member used for the fastening of two trays, the male part of an adjacent tray coupled to another is prevented from protruding, leaving the end of the male portion exposed, which can cause sharp areas during the installation of the cabling which damage the outer jacket of a cable, which can lead to an unwanted faster deterioration of the cabling itself over time.

According to another aspect of the invention, on the side corresponding to the access area of the joining member a widened region oriented facing outwards is provided, the widened region having a curved contour, such that it also reduces the creation of sharp areas which can cause damage in the cabling.

Preferably, at least one fitting flange present in the joining member is in the shape of a fingernail, said fitting flange extending towards the inside of the housing, in a plane inclined with respect to the plane defined by the side wall.

In a preferred embodiment, the coupling means may consist of a plurality of foldable fastening flanges foreseen to be inserted into holes made in said side walls.

According to another aspect of the invention, the fastening flanges extend on the upper side and on a side which is opposite from an access area.

Advantageously, in order to facilitate the insertion of the male portion into the housing defined by the joining member, a step portion is provided in the inner portion of the access area.

Another object of the present invention is to provide a cable tray comprising a sheet which is elongated and substantially bent in the shape of a U, defining a base and two side walls facing each other, characterised in that it is provided with a joint like the one described previously, intended to be coupled to an adjacent tray.

Thanks to these features, the bearing capacity and ultimately the parameters of mechanical resistance and general rigidity of the cable tray are improved compared to the current designs of cable trays known in the art, being especially suitable for large trays wherein the stresses and tensions are greater.

Preferably, slotted perforations present in the base and the side walls of the tray are arranged longitudinally with respect to a longitudinal axis of the base, the slotted perforations being present in the base in a plurality of inlaid regions arranged along the length of said base.

Thus, the cable tray described represents an innovative structure with structural and constituent features heretofore unknown for its intended purpose, reasons which, taken together with its usefulness, provide it with sufficient grounds for obtaining the requested exclusivity privilege.

Other features and advantages of the cable tray object of the present invention will become apparent from the description of a preferred but not exclusive embodiment illustrated by way of non-limiting example in the attached drawings, wherein:

### BRIEF DESCRIPTION OF THE DRAWINGS

Figure 1 is a perspective view of a cable tray provided with the joint according to the present invention;
Figure 2 is a perspective view from another point of view of the cable tray represented in figure 1;
Figure 3 is a detailed perspective view wherein the male portion of a cable tray can be seen;
Figure 4 is a detailed perspective view wherein the female portion of a cable tray can be seen;
Figure 5 is a perspective view of two trays coupled to each other;
Figure 6 is a front perspective view of a first embodiment of a joining member which makes up part of the joint for trays according to the invention;
Figure 7 is a rear perspective view of the joining member represented in figure 6;
Figure 8 is a front perspective view of a second embodiment of a joining member which makes up part of the joint for trays;
Figure 9 is a rear perspective view of the joining member represented in figure 8;
Figure 10 is a detailed perspective view of an inner region of the tray wherein a joining member is located;
Figure 11 is a detailed perspective view of an outer region of the tray wherein a joining member is located.

### DESCRIPTION OF A PREFERRED EMBODIMENT

In light of the aforementioned figures, and in accordance with the adopted numbering, one may observe therein a preferred exemplary embodiment of the invention, which comprises the parts and elements indicated and described in detail below.

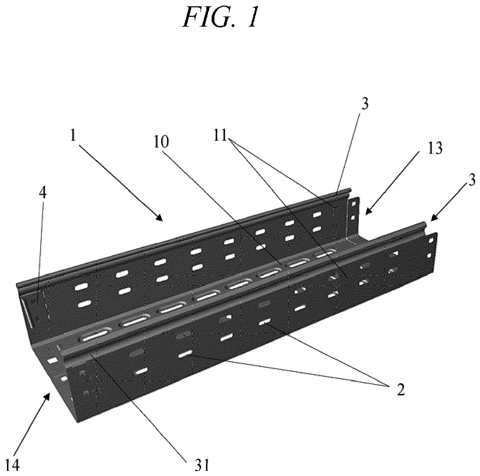

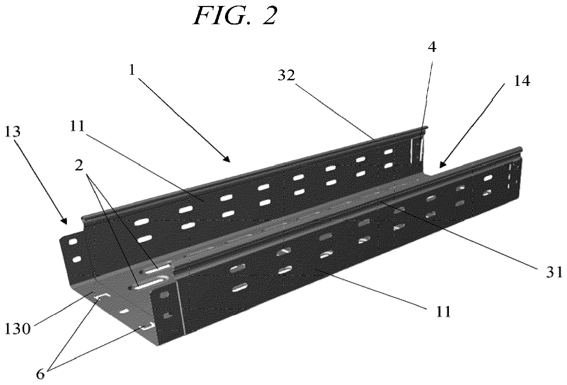

As shown in figures 1 and 2, a cable tray, indicated in general with the reference (1), comprises a sheet which is elongated and substantially bent in the shape of a U, defining a base (10) and two side walls (11) facing each other, wherein the base (10) and the side walls (11) have a plurality of perforations (2).

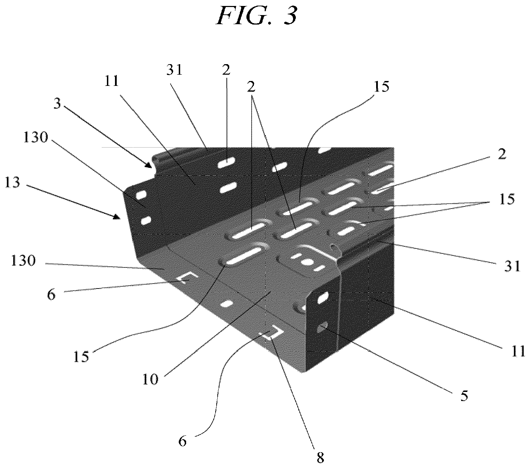

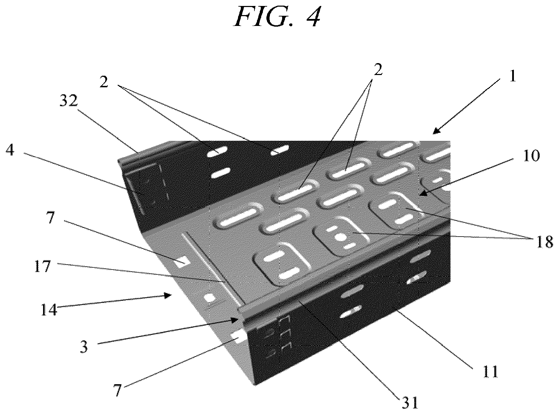

As seen in greater detail in figures 3 and 4, in the upper portion of each of the side walls (11) a reinforcing lip (3) is provided which provides greater rigidity to the assembly of the cable tray (1), including a first lower portion by way of a longitudinal rib (31) and an upper portion (32) substantially in the form of a hook oriented inwards, which has the purpose of improving the resistance to bending.

In order to enable the coupling between cable trays (1) in a linear arrangement in order to configure a support structure for the cabling, the plate defining the cable tray (1) defines at one end a male portion (13) while the opposite end defines a female portion (14). The male portion (13) is formed by an extension (130) with a relatively short, predetermined length and with a transverse cross section with smaller dimensions with respect to the rest of the body of the sheet, the male portion (13) being devoid of the aforementioned reinforcing lip (3). In this manner, in a coupling condition of two adjacent trays with each other, the side walls (11) and the base (10) of the cable trays (1) overlap with each other, the male portion (13) being located on the inside of the adjacent sheet in a coplanar manner.

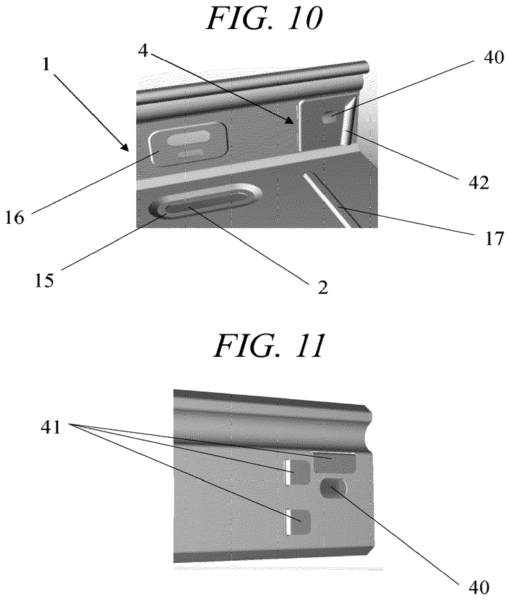

As seen in detail in figures 10 and 11, the female portion (14) includes on both side walls (11) a joining member (4) which is coupled through coupling means, defining a housing configured for the insertion of the male portion of an adjacent tray, the joining member having at least one fitting flange (40) capable of fitting in at least one corresponding through hole (5) made in the male portion (13). In other words, it is possible for the joining member to comprise one or two fitting flanges (40).

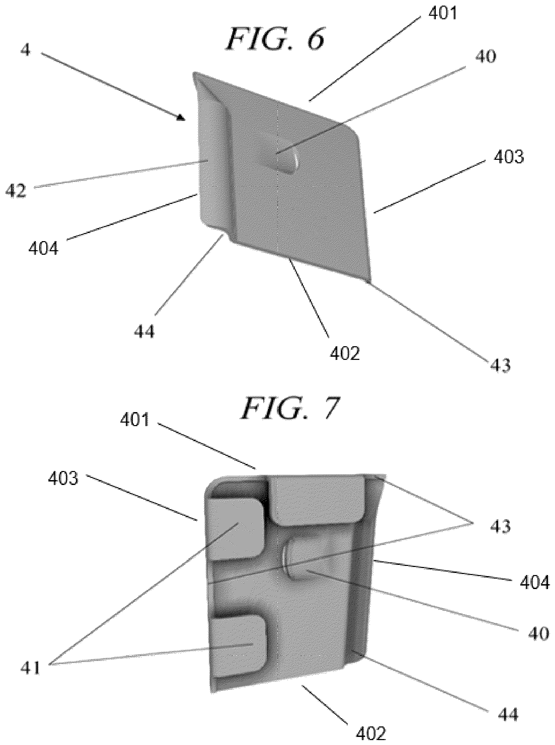

In the following, and making particular reference to figures 6 to 9, with respect to the joining member (4) which makes up part of the joining system, it is formed by a substantially rectangular laminar body which includes, on the upper side thereof and on a side which is opposite from an access area for the insertion of the male portion in a coupling condition between two trays, rounded extensions (43) which extend perpendicular to the laminar body, the laminar body being parallel to the side wall (11), such that a partially closed housing is defined between the inner face of the side wall (11).

As clearly seen in figures 7, 9 and 11, the above-mentioned coupling means consist of a plurality of fastening flanges (41) which cross through holes made in the side walls (11).

In addition, the joining member (4) includes in an access area a flange (42) provided with a widened region oriented facing outwards, the widened region having a curved contour, such that it facilitates the guiding of the male part of a cable tray to be inserted, and prevents the tearing of the cables during the placement thereof in the base (10).

Moreover, with the purpose of facilitating the insertion of the male portion into the housing defined by the joining member (4), a step portion (44) is provided in the inner portion of the access area.

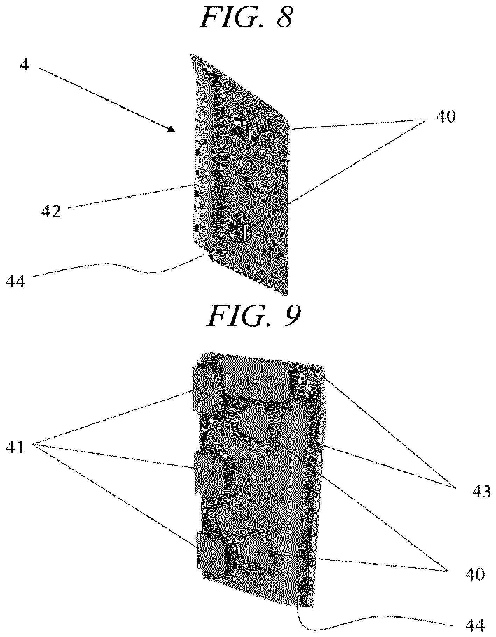

It should be noted that the fitting flange (40) present in the joining member is shaped like a fingernail, said fitting flange (40) extending in a plane inclined with respect to the plane defined by the side wall (11) of the cable tray (1). In this manner, a non-releasable coupling system is created, it not being necessary to use screws, as well as tools, in order to perform the screwing action to solidly link two adjacent trays to each other, especially with respect to the joint of the trays in the base (10) thereof. It should be noted that in figures 6 and 7, the exemplary embodiment of the joining member (4) has a single fitting flange (40), while in figures 8 and 9, the exemplary embodiment of the joining member (4) has a pair of fitting flanges (40) separated from each other.

Furthermore, the fitting flange (40) once placed in a coupling condition prevents the separation of both since it is not possible to perform the backward movement of the male portion (13) with respect to the tray to which the aforementioned male portion (13) is fastened. This is a consequence of the fact that the fitting flange (40) linked with the side wall of the tray protrudes outwards in an inclined manner with respect to the surface of the side wall (11) of the cable tray (1).

Returning again to the slotted perforations (2) located in the base (10) and in the side walls (11), they are arranged longitudinally with respect to a longitudinal axis of the base (10), the perforations (2) being located in the side areas of the base (10) located in a plurality of inlaid regions (15) arranged along said base (10).

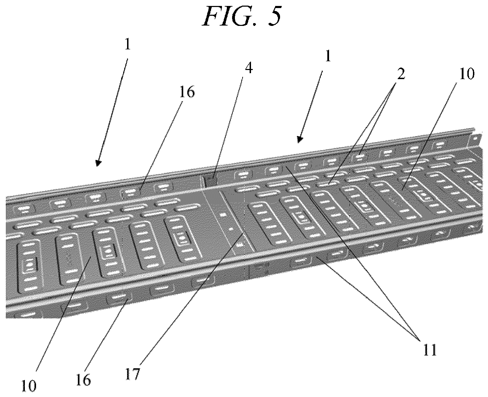

As seen in the embodiment shown in figure 5, the perforations located in the two side walls (11) are located in a plurality of additional inlaid regions (16) arranged along said side walls (11), wherein each of the additional inlaid regions (16) has two slotted perforations (2).

Additionally, in a portion of the base (10) which makes up part of the female portion (14), an elongated projection (17) is provided which extends transversely with respect to the longitudinal axis of the base (10) and protrudes from the face of the base (10) which is intended for the arrangement of cabling (not shown).

Returning again to the region of the base (10) which makes up part of the male portion (13), it includes at least one pair of floating flanges (6) die cut and defined by a slit (8), spaced from each other, which can be coupled in through holes (7) made in the female portion (14), the floating flanges (6) being in a cantilevered arrangement and configured to be bent in a joint condition between two cable trays (1) adjacent to each other (see figure 3).

Moreover, it is also possible to provide a plurality of slotted perforations (2) located in the central portion of the base (10), which are grouped in a plurality of secondary inlays (18) arranged along said base, each of these secondary inlays (18) being arranged transversely with respect to the longitudinal axis of the base (10).

The details, shapes, dimensions and other complementary elements used in the manufacturing the joint for cable trays of the invention may be suitably replaced with others that do not depart from the scope defined by the claims below.

## Claims

1. A system comprising a cable tray (1) provided with a joint intended to be coupled to an adjacent tray, said tray (1) comprising a sheet which is elongated and substantially bent in the shape of a U, defining a base (10) and two side walls (11) facing each other, wherein the base and the side walls have a plurality of perforations, wherein the side walls are provided with a reinforcing lip (3) on a free end portion of said side walls, said tray including at one end along its longitudinal axis a male portion (13) with a predetermined length with a transverse cross section with smaller dimensions with respect to the rest of the sheet, the male portion (13) being free of the lip, and a female portion (14) present at the opposite end intended for the coupling of a male portion of an adjacent tray, such that in a coupling condition of two adjacent trays with each other, the side walls and the base (10) of the trays overlap with each other, the male portion (13) being located inside the adjacent sheet in a coplanar manner, wherein said system further comprises two joining members (4) configured to be coupled, one to each side wall (11) of the female portion (14) through coupling means (41), each joining member (4) defining, when coupled to the female portion (14), a housing configured for the insertion of the male portion (13) of an adjacent tray, each joining member (4) having at least one fitting flange (40) capable of fitting in a through hole made in the male portion, wherein each joining member (4) is formed by a substantially rectangular laminar body having an upper side (401), a low side (402) and two lateral sides (403, 404) including, on the upper side (401) thereof and on one lateral side (403) which is opposite from an access area for the insertion of the male portion (13) in a coupling condition between two trays, rounded extensions (43) which extend perpendicular to the laminar body, the laminar body being configured to be parallel to one of the side walls (11) of the tray (1), such that a partially closed housing is defined between the inner face of said side wall (11) and the joining member (4) when coupled to the female portion (14); wherein slotted perforations (2) located in the base and the side walls are arranged longitudinally with respect to a longitudinal axis of the base (10), the slotted perforations (2) being present in the base in a plurality of inlaid regions (15) arranged along the length of said base (10); and wherein in a portion of the base (10) which makes up part of the female portion, a projection (17) is provided which extends transversely with respect to the longitudinal axis of the base and protrudes from the face of the base, which is intended for the arrangement of cabling.

2. A system according to claim 1, **characterised in that** on the side corresponding to the access area of the joining member (4) a widened region oriented facing outwards is provided, the widened region having a curved contour.

3. A system according to any of the preceding claims, **characterised in that** the fitting flange (40) located in the joining member (4) is shaped like a fingernail, said fitting flange (40) extending, when coupled, towards the inside of the housing, in a plane inclined with respect to the plane defined by the side wall (11).

4. A system according to claim 1, **characterised in that** the coupling means consist of a plurality of foldable fastening flanges (41) intended to be inserted into holes made in said side walls (11).

5. A system according to claim 4, **characterised in that** the fastening flanges (41) extend on the upper side and on a side which is opposite from an access area.

6. A system according to any of the preceding claims, **characterised in that** a step portion is provided in the inner portion of the access area.

7. A system according to claim 1, **characterised in that** the perforations present in the two side walls are located in a plurality of additional inlaid regions (16) arranged along said side walls (11).

8. A system according to claim 7, **characterised in that** each of the additional inlaid regions (16) has two slotted perforations.

9. A system according to claim 8, **characterised in that** the two slotted perforations have different sizes.

10. A system according to any of the preceding claims 1 to 9, **characterised in that** the region of the base which makes up part of the male portion (13) includes at least one pair of floating flanges (6) spaced from each other, which can be coupled in through holes made in the female portion (14), the floating flanges (6) being in a cantilevered arrangement and configured to be bent in a joint condition between two cable trays adjacent to each other.

## Patentansprüche

1. System, das eine Kabelrinne (1) umfasst, die mit einer Verbindung versehen ist, die mit einer angrenzenden Rinne gekoppelt werden soll, wobei die Rinne (1) eine Platte umfasst, die länglich und im Wesentlichen in Form eines U gebogen ist und ein Unterteil (10) und zwei einander zugewandte Seitenwände (11) definiert, wobei das Unterteil und die Seitenwände eine Vielzahl von Perforationen aufweisen, wobei die Seitenwände an einem freien Endabschnitt der Seitenwände mit einer Verstärkungslippe (3) versehen sind, wobei die Rinne an einem Ende entlang ihrer Längsachse einen männlichen Abschnitt (13) mit einer vorgegebenen Länge mit einem Querschnitt mit kleineren Abmessungen in Bezug auf den Rest der Platte einschließt, wobei der männliche Abschnitt (13) frei von der Lippe ist und ein weiblicher Abschnitt (14) am gegenüberliegenden Ende vorliegt, der zum Koppeln eines männlichen Abschnitts einer angrenzenden Rinne bestimmt ist, sodass in einem Kopplungszustand zweier angrenzender Rinnen miteinander die Seitenwände und das Unterteil (10) der Rinnen einander überlappen, wobei der männliche Abschnitt (13) innerhalb der angrenzenden Platte in einer koplanaren Weise angeordnet ist,
wobei das System ferner zwei Verbindungselemente (4) umfasst, die konfiguriert sind, um über Kopplungsmittel (41) mit jeder Seitenwand (11) des weiblichen Abschnitts (14) gekoppelt zu werden, wobei jedes Verbindungselement (4) bei Kopplung mit dem weiblichen Abschnitt (14) definiert:
ein Gehäuse, das zum Einsetzen des männlichen Abschnitts (13) einer angrenzenden Rinne konfiguriert ist, wobei jedes Verbindungselement (4) mindestens einen Passflansch (40) aufweist, der in der Lage ist, in ein Durchgangsloch im männlichen Abschnitt zu passen, wobei jedes Verbindungselement (4) aus einem im Wesentlichen rechteckigen Laminarkörper gebildet ist, der eine Oberseite (401), eine Unterseite (402) und zwei Seiten (403, 404) einschließlich, auf der Oberseite (401) davon und auf einer Seite (403), die einem Zugangsbereich zum Einsetzen des männlichen Abschnitts (13) in einem Kupplungszustand zwischen zwei Rinnen gegenüberliegt, abgerundeter Verlängerungen (43) aufweist, die sich senkrecht zum Laminarkörper erstrecken, wobei der Laminarkörper konfiguriert ist, um parallel zu einer der Seitenwände (11) der Rinne (1) zu verlaufen, sodass zwischen der Innenseite der Seitenwand (11) und dem Verbindungselement (4) bei Kopplung mit dem weiblichen Abschnitt (14) ein teilweise geschlossenes Gehäuse definiert ist;
wobei sich im Unterteil geschnitzte Perforation (2) befinden und die Seitenwände in Längsrichtung in Bezug auf eine Längsachse des Unterteils (10) angeordnet sind, wobei die geschlitzten Perforationen (2) in dem Unterteil in einer Vielzahl von eingelegten Bereichen (15) vorhanden sind, die entlang der Länge des Unterteils (10) angeordnet sind; und
wobei in einem Abschnitt des Unterteils (10), der einen Teil des weiblichen Abschnitts bildet, ein Vorsprung (17) bereitgestellt ist, der sich quer zur Längsachse des Unterteils erstreckt und aus der Fläche des Unterteils hervorsteht, die zur Anordnung von Verkabelung vorgesehen ist.

2. System nach Anspruch 1, **dadurch gekennzeichnet, dass** auf der Seite, die dem Zugangsbereich des Verbindungselements (4) entspricht, ein nach außen gerichteter erweiterter Bereich bereitgestellt ist, wobei der erweiterte Bereich eine gekrümmte Kontur aufweist.

3. System nach einem der vorhergehenden Ansprüche, **dadurch gekennzeichnet, dass** der im Verbindungselement (4) angeordnete Passflansch (40) wie ein Fingernagel geformt ist, wobei sich der Passflansch (40) im gekoppelten Zustand in einer Ebene, die in Bezug auf die durch die Seitenwand (11) definierte Ebene geneigt ist, in Richtung der Innenseite des Gehäuses erstreckt.

4. System nach Anspruch 1, **dadurch gekennzeichnet, dass** die Kopplungsmittel aus einer Vielzahl faltbarer Befestigungsflansche (41) bestehen, die zum Einführen in Löcher in den Seitenwänden (11) vorgesehen sind.

5. System nach Anspruch 4, **dadurch gekennzeichnet, dass** sich die Befestigungsflansche (41) auf der Oberseite und auf einer Seite erstrecken, die einem Zugangsbereich gegenüberliegt.

6. System nach einem der vorhergehenden Ansprüche, **dadurch gekennzeichnet, dass** im Innenabschnitt des Zugangsbereichs ein Stufenabschnitt bereitgestellt ist.

7. System nach Anspruch 1, **dadurch gekennzeichnet, dass** sich die in den beiden Seitenwänden vorhandenen Perforationen in einer Vielzahl von zusätzlichen eingelegten Bereichen (16) befinden, die entlang der Seitenwände (11) angeordnet sind.

8. System nach Anspruch 7, **dadurch gekennzeichnet, dass** die zusätzlichen eingelegten Bereiche (16) jeweils zwei geschnitzte Perforationen aufweisen.

9. System nach Anspruch 8, **dadurch gekennzeichnet, dass** die beiden geschnitzten Perforationen unterschiedliche Größen aufweisen.

10. System nach einem der vorhergehenden Ansprüche 1 bis 9, **dadurch gekennzeichnet, dass** der Bereich des Unterteils, der einen Teil des männlichen Abschnitts (13) bildet, mindestens ein Paar schwebender Flansche (6) aufweist, die im Abstand voneinander angeordnet sind, die in Durchgangslöcher in dem weiblichen Abschnitt (14) gekoppelt werden können, wobei die schwebenden Flansche (6) in einer freitragenden Anordnung vorliegen und konfiguriert sind, um in einem Verbindungszustand zwischen zwei aneinandergrenzenden Kabelrinnen gebogen zu werden.

## Revendications

1. Système comprenant un chemin de câbles (1) muni d'une articulation destinée à être accouplée à un chemin adjacent, ledit chemin (1) comprenant une feuille qui est allongée et sensiblement pliée sous la forme d'un U, définissant une base (10) et deux parois latérales (11) se faisant face, dans lequel la base et les parois latérales ont une pluralité de perforations, dans lequel les parois latérales sont munies d'une lèvre de renfort (3) sur une portion d'extrémité libre desdites parois latérales, ledit chemin comportant au niveau d'une extrémité le long de son axe longitudinal une portion mâle (13) de longueur prédéterminée avec une section en coupe transversale de dimensions inférieures par rapport au reste de la feuille, la portion mâle (13) étant dégagée de la lèvre, et une portion femelle (14) présente au niveau de l'extrémité opposée destinée à l'accouplement d'une portion mâle d'un chemin adjacent, de telle sorte que dans une condition d'accouplement de deux chemins adjacents l'un avec l'autre, les parois latérales et la base (10) des chemin se chevauchent, la portion mâle (13) étant située à l'intérieur de la feuille adjacente de manière coplanaire,
dans lequel ledit système comprend en outre deux éléments de jonction (4) conçus pour être accouplés, un à chaque paroi latérale (11) de la portion femelle (14) par l'intermédiaire de moyens d'accouplement (41), chaque élément de jonction (4) définissant, lorsqu'il est accouplé à la portion femelle (14),
un logement conçu pour l'insertion de la portion mâle (13) d'un chemin adjacent, chaque élément de jonction (4) ayant au moins une bride de montage (40) susceptible de s'adapter dans un trou traversant ménagé dans la portion mâle, dans lequel chaque élément de jonction (4) est formé par un corps laminaire sensiblement rectangulaire ayant un côté supérieur (401), un côté bas (402) et deux côtés latéraux (403, 404) comportant, sur son côté supérieur (401) et sur un côté latéral (403) qui est opposé à une zone d'accès pour l'insertion de la portion mâle (13) dans une condition d'accouplement entre deux chemins, des extensions arrondies (43) qui s'étendent perpendiculairement au corps laminaire, le corps laminaire étant conçu pour être parallèle à l'une des parois latérales (11) du chemin (1), de telle sorte qu'un logement partiellement fermé est défini entre la face interne de ladite paroi latérale (11) et l'élément de jonction (4) lorsqu'il est accouplé à la portion femelle (14) ;
dans lequel des perforations à fentes (2) situées dans la base et les parois latérales sont agencées longitudinalement par rapport à un axe longitudinal de la base (10), les perforations à fentes (2) étant présentes dans la base dans une pluralité de régions incrustées (15) agencées le long de la longueur de ladite base (10) ; et
dans lequel dans une portion de la base (10) qui constitue une partie de la portion femelle, une saillie (17) est prévue, qui s'étend transversalement par rapport à l'axe longitudinal de la base et fait saillie de la face de la base, qui est destinée à l'agencement de câblage.

2. Système selon la revendication 1, **caractérisé en ce que** sur le côté correspondant à la zone d'accès de l'élément de jonction (4) une région élargie orientée faisant face vers l'extérieur est prévue, la région élargie ayant un contour incurvé.

3. Système selon l'une quelconque des revendications précédentes, **caractérisé en ce que** la bride de montage (40) située dans l'élément de jonction (4) est formée comme un ongle, ladite bride de montage (40) s'étendant, une fois accouplée, vers l'intérieur du logement, dans un plan incliné par rapport au plan défini par la paroi latérale (11).

4. Système selon la revendication 1, **caractérisé en ce que** les moyens d'accouplement sont constitués d'une pluralité de brides de fixation (41) pliables destinées à être insérées dans des trous ménagés dans lesdites parois latérales (11).

5. Système selon la revendication 4, **caractérisé en ce que** les brides de fixation (41) s'étendent sur le côté supérieur et sur un côté qui est opposé à une zone d'accès.

6. Système selon l'une quelconque des revendications précédentes, **caractérisé en ce qu'**une portion de marche est prévue dans la portion interne de la zone d'accès.

7. Système selon la revendication 1, **caractérisé en ce que** les perforations présentes dans les deux parois latérales sont situées dans une pluralité de régions incrustées (16) supplémentaires agencées le long desdites parois latérales (11).

8. Système selon la revendication 7, **caractérisé en ce que** chacune des régions incrustées (16) supplémentaires présente deux perforations à fentes.

9. Système selon la revendication 8, **caractérisé en ce que** les deux perforations à fentes ont des tailles différentes.

10. Système selon l'une quelconque des revendications précédentes 1 à 9, **caractérisé en ce que** la région de la base qui constitue une partie de la portion mâle (13) comporte au moins une paire de brides flottantes (6) espacées les unes des autres, qui peuvent être accouplées dans des trous traversants ménagés dans la portion femelle (14), les brides flottantes (6) étant dans un agencement en porte-à-faux et conçues pour être pliées dans un état d'articulation entre deux chemins de câbles adjacents l'un à l'autre.
